# EUROPEAN PATENT SPECIFICATION

(11) **EP 4 265 364 B1**
(45) Date of publication and mention of the grant of the patent: **31.12.2025**
(21) Application number: 22382365.9
(22) Date of filing: 19.04.2022
(51) Int. Cl.: B23K 26/08, B65H 35/00, B65H 35/04, B65H 35/02, B65H 23/10, B65H 23/188, B65H 23/192, B31D 1/02, B65B 61/02, B23K 26/362, B23K 26/402, B23K 101/16, B23K 103/00

(54) **PLANT AND METHOD FOR LASER SCORING AND LAMINATING OR VICE VERSA A RESEALABLE LABEL ON A WEB MATERIAL WITH OPTION TO DISPENSE WITH LAMINATION**
ANLAGE UND VERFAHREN ZUM LASERRITZEN UND LAMINIEREN ODER UMGEKEHRT EINES WIEDERVERSCHLIESSBAREN ETIKETTS AUF EINEM BAHNMATERIAL MIT DER MÖGLICHKEIT, AUF EINE LAMINIERUNG ZU VERZICHTEN
INSTALLATION ET PROCÉDÉ DE MARQUAGE LASER ET DE STRATIFICATION OU VICE VERSA D'UNE ÉTIQUETTE REFERMABLE SUR UN MATÉRIAU EN BANDE AVEC POSSIBILITÉ DE RENONCER À LA STRATIFICATION

(43) Date of publication of application: 25.10.2023
(73) Proprietor: COMEXI GROUP INDUSTRIES, SAU, 17457 Riudellots de la Selva (ES)
(72) Inventor: PRAT GIL, Jordi, 17002 Girona (ES); MATÓ REVERTER, Robert, 17455 Caldes de Malavella (ES)
(74) Representative: Torner, Juncosa I Associats, SL

(56) References cited:
- EP-B1- 2 881 212
- US-A1- 2004 250 947
- US-A1- 2016 083 133

## Description

### Technical field

The present invention relates to the field of packaging material including a resealable label or flap obtained from a web of flexible material which is treated in a plant defining a weakening zone by laser or similar and then apply by lamination a label with the possibility of change at will the order of the operations depending on the type of web material to be used or also allowing to perform only one laser treatment and in all cases including a final stage of cutting of several parallel strips of the material web and rewinding of each of the strips.

The invention proposes both a method and a plant to implement the technical concept.

### State of the Art

EP2881212B1 of the same applicant relates to a machine for perforating a film web, particularly a machine for perforating a continuous and moving film web intended for the formation of containers, for example for containing food products.
EP3170611 B1 of the same applicant discloses a continuous web laser treatment module, including a web material entrance and a web material exit connected through a web path, being a continuous web material transported along said web path, and said module including laser generators which create laser beams over said web material to burn it, cut it, print it, or to produce any other laser treatment on said web material continuously transported.
JP6041556B2 discloses an in-mould label forming apparatus for forming an in-mould label for moulding by a label forming means by sequentially transporting, to a label formation region in association with a winding operation, a label sheet derived from a sheet roll on which a plurality of label patterns are printed and wound at required intervals in a row direction that is a direction orthogonal to the transport direction.
JP6198265B2 divulges a material supporting shaft rotatably and axially supported on an upper side in a transport direction of a continuous sheet to which a surface base material sheet having a label graphic printed thereon is releasably adhered, the original material supporting shaft having a continuous sheet wound thereon being mounted thereon; A rotary roller and a pressure roller that sandwich a continuous sheet fed out from an original material roll, an electric motor that is connected to the rotary roller and transports the sandwiched continuous sheet in cooperation with the pressure roller, A continuous sheet feeding means connected to an original material supporting shaft, the continuous sheet feeding means including a braking mechanism that applies a predetermined braking force to the original material supporting shaft to apply a predetermined tension to the continuous sheet fed from the original material roll, and when the tension applied to the continuous sheet reaches or exceeds a predetermined value, slip the original material supporting shaft to make the tension applied to the continuous sheet constant.
CN201728891U discloses a system for preparing a positioning laser label comprising a machine base, a first discharging device and a first tension compensation device, wherein the first discharging device is positioned in front of the machine base and used for placing a printing material; the printing device group is arranged on the machine base, and a die cutting device is positioned behind the printing device group. The base is also provided with a laser imprinting device which is positioned in front of the printing device group; the first printing device of the printing device group is a metal reflective ink printing device; the system also comprises a second discharging device and a second tension compensation device, wherein the second discharging device is positioned in front of the machine base and used for mounting release materials.
EP1753670B1 relates to flexible packaging for products, and particularly discloses methods for making such packaging that is reclosable after initial opening comprising a flexible packaging laminate (46) formed by pattern-applying a pressure-sensitive adhesive (20) in a predetermined pattern (22) onto one surface of a first structure (10), and pattern-applying a permanent laminating adhesive (34) onto the one surface of the first structure (10) such that the permanent adhesive (34) does not cover the predetermined pattern (22) of pressure sensitive adhesive (20), and adhesively joining the first structure (10) to a second structure (42) via the permanent adhesive (34) so as to form the laminate. An opening and reclose feature formed in the laminate, and comprising an outer flap portion (86) formed by scoring through the outer structure (10) along an outer score line (52), and an inner flap portion formed by scoring through the inner structure (42) along an inner score line (62), the outer and inner score lines being spaced from all edges of the laminate (46), the inner score line (62) creating an opening into the container when the flap portions (86, 88) are peeled back, a marginal region (90) of the outer flap portion extending beyond an edge of the inner flap portion (88) and overlying an underlying surface of the inner structure (42), the flap portions (86, 88) being joined with the pattern-applied permanent adhesive (34), and the pattern-applied pressure-sensitive adhesive (20) being disposed between the marginal region (90) of the outer flap portion (86) and the underlying surface of the inner structure (42) for attaching and re-attaching the outer flap portion (86) to the underlying surface. The score lines (52, 62) are formed with a laser (54,64).
Other patent documents in the field related to labels and packaging with easy opening features are: US2022041358A1, WO2014142886A1,US2020071046 A1, WO2015075420A1 and US2011198838A1, 2011158014A1.

### Disclosure of the invention

The invention proposes a plant for laser scoring and laminating comprising:
an unwinder station from which a web of flexible material, such as a polymeric film is fed to a support and guiding line by means of rollers;
a laser station included in a guided passage of the above-mentioned web of material, the laser station comprising at least one laser unit to create weakening lines by scoring the web with a certain contour in some target zones, a labelling station, a slitter-rewinder station to rewind and or slit the web after treatment in the laser station and in the labelling station, characterized in that

the labelling station is included in another guided passage of the above-mentioned web of material, comprising at least a labelling unit, prepared for attaching by lamination a resealable label in these target zones; and
wherein the web of flexible material can be selectively driven to pass firstly through the laser station and then through the labelling station or the other way around, or to pass only through the laser station;
the passage of the web along said laser station includes a path through two adjustable roller nips and a path in contact with an upper loadcell based weighing and in contact with a lower load cell-based weighing;
so that a dual controlled tension is applied to the web by acting on the adjustable roller nips depending on the passage of the web first trough the laser station and then through the labelling station or the passage of the web first through the labelling station and then the web and label through the laser station; the dual tension being obtained by the different values of the load cell-based weighing, that are transmitted to a machine controller acting over the roller nips.

A method is also proposed comprising:
feeding a web of flexible material, such as a polymeric film to a support and guiding line by means of rollers;
passing the fed web through a laser station comprising at least one laser unit to create weakening lines by scoring the web with a certain contour in some target zones;
passing the fed web with scored lines through a labelling station comprising at least a labelling unit, prepared for attaching by lamination a resealable label in these target zones; and
slit the fed web with label and rewind;
wherein the web of flexible material is selectively driven to pass firstly through the laser station and then through the labelling station or the other way around, or to pass only through the laser station and characterized in that the passage of the web along said laser station includes a path through two adjustable roller nips and a path in contact with an upper load cell based weighing and in contact with a lower load cell-based weighing; so that a dual controlled tension is applied to the web by acting on the adjustable roller nips depending on the passage of the web first trough the laser station and then through the labelling station or the passage of the web first through the labelling station and then the web and label through the laser station; the dual tension being obtained by the different values of the load cell-based weighing, that are transmitted to a machine controller acting over the roller nips.

### Brief description of the Figures

The foregoing and other advantages and features will be more fully understood from the following detailed description of embodiments with reference to the accompanying drawings, to be taken in an illustrative and non-limitative manner, in which:
Fig. 1 is a layout of the plant embodiment including laser station + labelling station. Illustrating the unwinder station, the laser station and the labelling station. After the laser station and labelling station, a slitter station and rewinder station well known in the art has been included.
Fig. 2 is a layout of the plant embodiment including labelling station + laser station. Illustrating the unwinder station, the laser station and the labelling station. After the labelling station and laser station a slitter station and rewinder station well known in the art has been included.

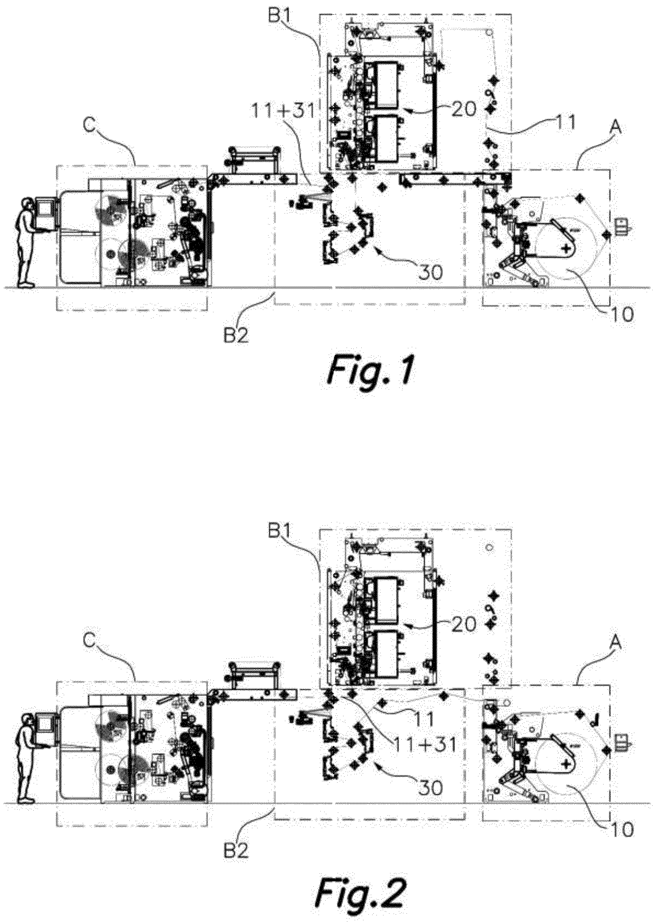

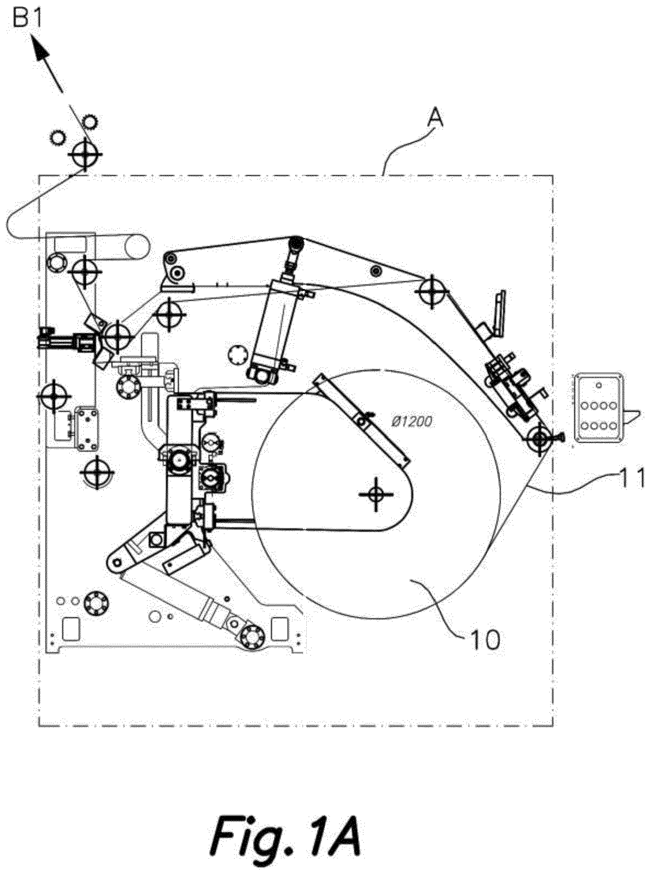

Fig. 1A is a detail of the embodiment of the unwinder station comprising the unwinder unit of web material feeding the laser station with web material.

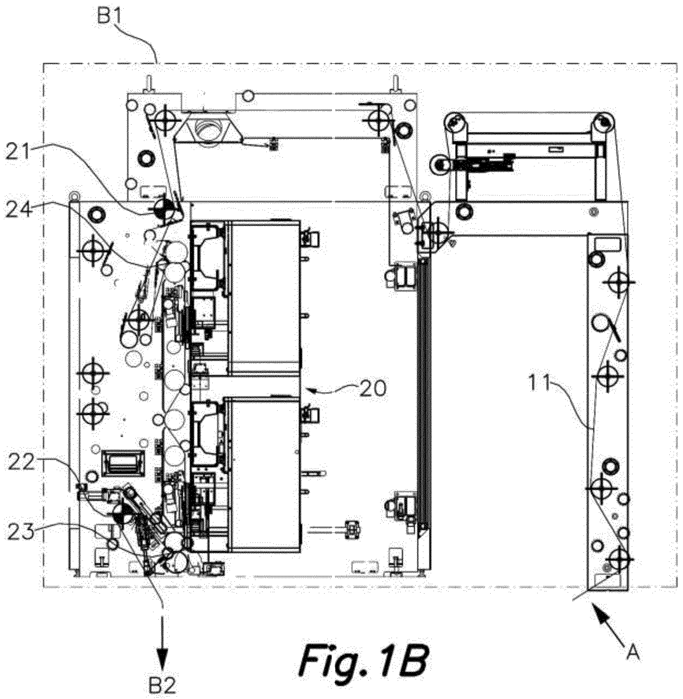

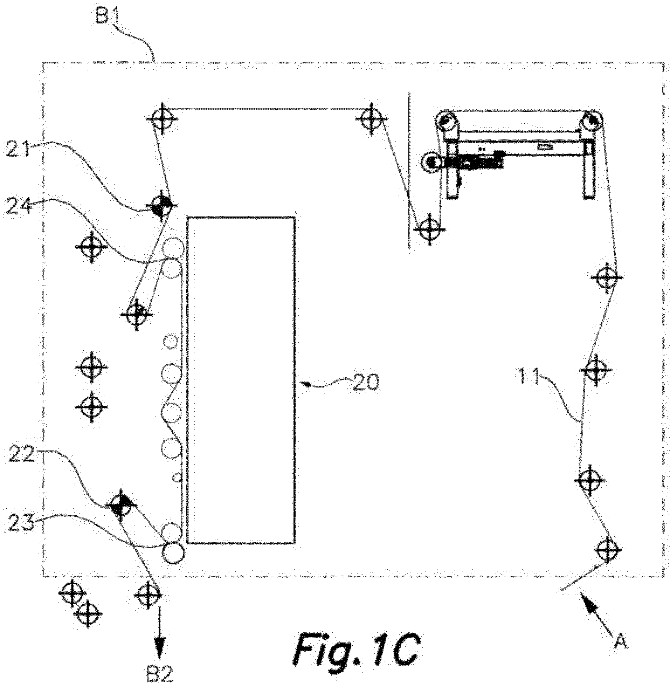

Fig. 1B and 1C is a detail of the embodiment of the laser station and the web material path with the dual tension control adjustment, upper roller nip with the lower load cell-based weighing included in the laser unit.

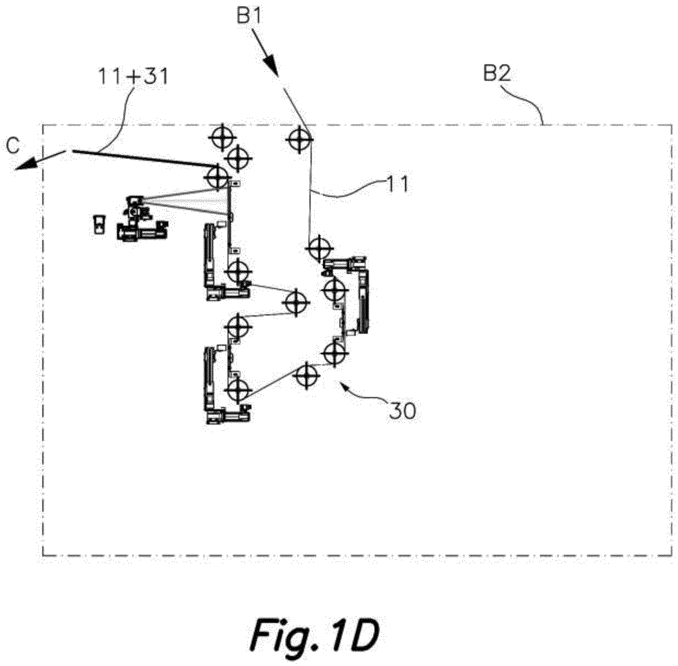

Fig. 1D is a detail of the embodiment of the labelling station with the web material path through the labelling unit.

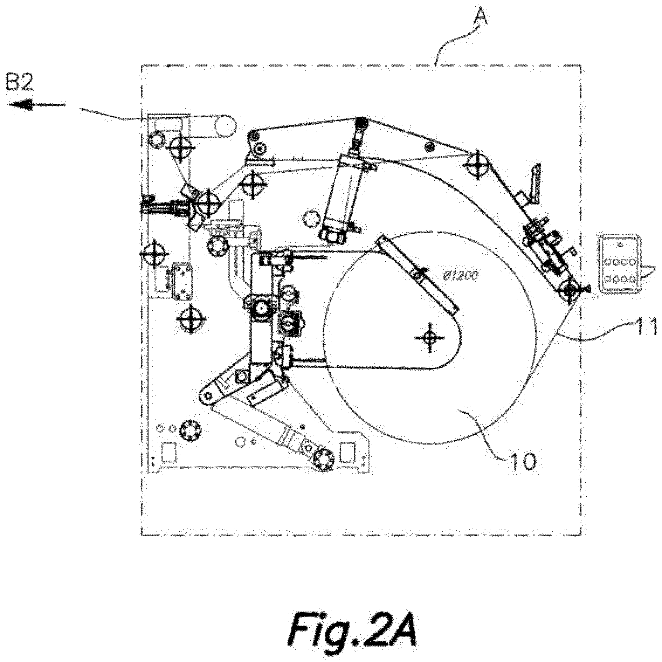

Fig. 2A is a detail of the embodiment of the unwinder station comprising the unwinder unit of web material feeding the labelling station with web material.

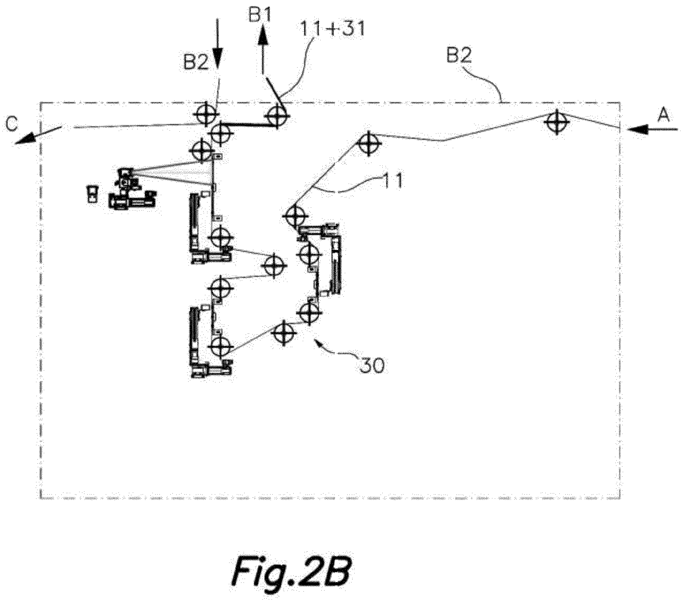

Fig. 2B is a detail of the embodiment of the labelling station with the web material path through the labelling unit feeding the web + label material to the laser station.

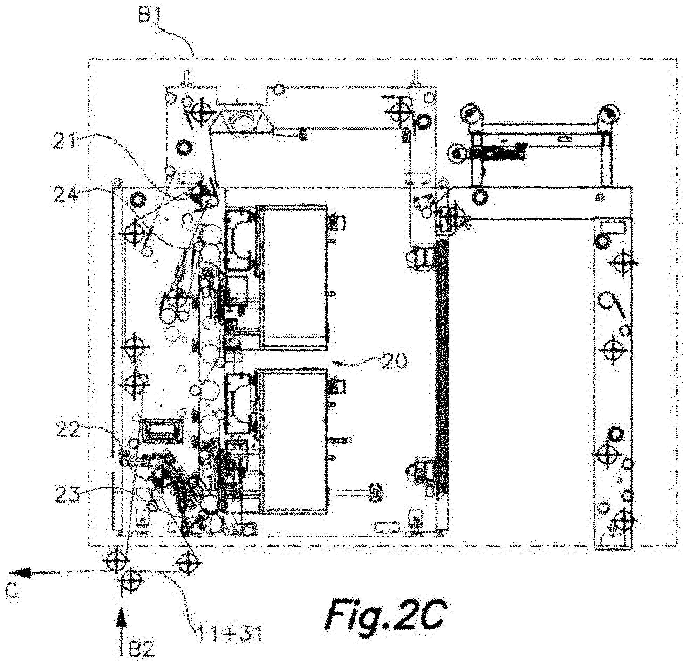

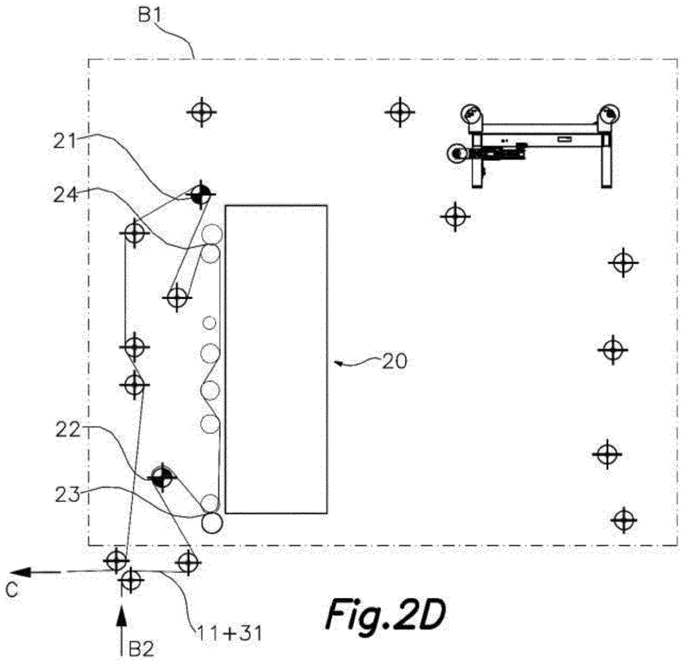

Fig. 2C and 2D is a detail of the embodiment of the laser station and the web + label material path with the dual tension control adjustment, lower roller nip with the upper load cell-based weighing included in the laser unit.

### Detailed description

As shown in the drawings the plant for laser scoring and laminating of this invention comprises:
an unwinder station A from which a web 11 of flexible material, such as a polymeric film is fed to a support and guiding line by means of rollers;
a laser station B1 included in a guided passage of the above-mentioned web 11 of material, the laser station B1 comprising at least one laser unit 20 to create weakening lines by scoring the web 11 with a certain contour in some target zones;
a labelling station B2 included in another guided passage of the above-mentioned web 11 of material, comprising at least a labelling unit 30, prepared for attaching by lamination a resealable label 31 in these target zones; and
a slitter-rewinder station C to rewind and or slit the web 11 after treatment in the laser station B1 and in the labelling station B2. The web is generally cut into strips each of which contains a line-up of tags set to register

According to the principles of this invention wherein the web 11 of flexible material can be selectively driven (manually directed or automated operation) to pass firstly through the laser station B1 and then through the labelling station B2)or the other way around, or to pass only through the laser station B1.

As can be seen in the drawings the passage of the web 11 along the laser station B1) includes a path through two adjustable roller nips 23, 24 and a path in contact with an upper loadcell based weighing 21 and in contact with a lower load cell-based weighing 22; Through these means and arrangements at least a dual controlled tension is applied to the web 11 by acting on the adjustable roller nips 23, 24 depending on the passage of the web 11 first trough the laser station B1 and then through the labelling station B2) or the passage of the web 11 first through the labelling station B2 and then the web 11 including labels 31 through the laser station B1. The dual tension is obtained by the different values of the load cell-based weighing 21, 22, that are transmitted to a machine controller acting over the roller nips 23, 24 adjusting the pressure on the web 11.

I=n general the web 11 includes a printing pattern, and the labels 31 are applied in exact correspondence , i.e., to register with said target zones.

If the web contains different parallel lines of labels 31 which is the most common, the web is slitted in several parallel lines each including a label 31.

As previously indicated a method for laser scoring and laminating is characterized by the following stages feeding a web 11 of flexible material, such as a polymeric film to a support and guiding line by means of rollers;
passing the fed web 11 through a laser station B1 comprising at least one laser unit 20 to create weakening lines by scoring the web 11 with a certain contour in some target zones; passing the fed web 11 with scored lines through a labelling station B2 comprising at least a labelling unit 30, prepared for attaching by lamination a resealable label 31 in these target zones; and
slit the fed web 1) with labels 31 and rewind;
wherein the web 11 of flexible material is selectively driven to pass firstly through the laser station B1 and then through the labelling station B2 or the other way around, or to pass only through the laser station B1.

As already explained the passage of the web 11 along said laser station B1 includes a path through two adjustable roller nips 23, 24 and a path in contact with an upper loadcell based weighing 21 and in contact with a lower load cell-based weighing 22. Therefore a dual controlled tension can be selectively applied to the web 1) by acting on the adjustable roller nips 23, 24 depending on the passage of the web 11 first trough the laser station B1 and then through the labelling station B2 or the passage of the web 11 first through the labelling station B2 and then the web 11 and label 31 through the laser station B1.The dual tension is obtained by the different values of the load cell-based weighing 21, 2), that are transmitted to a machine controller acting over the roller nips 23, 24.

In most cases the web 11 includes a printing pattern, and the labels 31 are applied in exact correspondence with the referred target zones.

## Claims

1. Plant for laser scoring and laminating, comprising:
an unwinder station (A) from which a web (11) of flexible material, such as a polymeric film is fed to a support and guiding line by means of rollers;
a laser station (B1) included in a guided passage of the above-mentioned web (11) of material, the laser station (B1) comprising at least one laser unit (20) to create weakening lines by scoring the web (11) with a certain contour in some target zones;
a labelling station (B2);
a slitter-rewinder station (C) to rewind and or slit the web (11) after treatment in the laser station (B1) and in the labelling station (B2),
**characterized in that**
the labelling station (B2) is included in another guided passage of the above-mentioned web (11) of material, comprising at least a labelling unit (30), prepared for attaching by lamination a resealable label (31) in these target zones;
the web (11) of flexible material can be selectively driven to pass firstly through the laser station (B1) and then through the labelling station (B2) or the other way around, or to pass only through the laser station (B1);
the passage of the web (11) along said laser station (B1) includes a path through two adjustable roller nips (23, 24) and a path in contact with an upper loadcell based weighing (21) and in contact with a lower load cell-based weighing (22);
so that a dual controlled tension is applied to the web (11) by acting on the adjustable roller nips (23, 24) depending on the passage of the web (11) first trough the laser station (B1) and then through the labelling station (B2) or the passage of the web (11) first through the labelling station (B2) and then the web (11) and label (31) through the laser station (B1); the dual tension being obtained by the different values of the load cell-based weighing (21, 22), that are transmitted to a machine controller acting over the roller nips (23, 24).

2. The plant for laser scoring and laminating according to claim 1 wherein the web (11) includes a printing pattern, and the label (31) is applied in exact correspondence with said target zones.

3. The plant for laser scoring and laminating according to claim 1 or 2 wherein the web is slitted in several parallel lines each including a label (31).

4. A method for laser scoring and laminating, the method comprising:
feeding a web (11) of flexible material, such as a polymeric film to a support and guiding line by means of rollers;
passing the fed web (11) through a laser station (B1) comprising at least one laser unit (20) to create weakening lines by scoring the web (11) with a certain contour in some target zones;
passing the fed web (11) with scored lines through a labelling station (B2) comprising at least a labelling unit (30), prepared for attaching by lamination a resealable label (31) in these target zones; and
slit the fed web (11) with label (31) and rewind;
wherein the web (11) of flexible material is selectively driven to pass firstly through the laser station (B1) and then through the labelling station (B2) or the other way around, or to pass only through the laser station (B1);
**characterized in that**
the passage of the web (11) along said laser station (B1) includes a path through two adjustable roller nips (23, 24) and a path in contact with an upper loadcell based weighing (21) and in contact with a lower load cell-based weighing (22);
so that a dual controlled tension is applied to the web (11) by acting on the adjustable roller nips (23, 24) depending on the passage of the web (11) first trough the laser station (B1) and then through the labelling station (B2) or the passage of the web (11) first through the labelling station (B2) and then the web (11) and label (31) through the laser station (B1); the dual tension being obtained by the different values of the load cell-based weighing (21, 22), that are transmitted to a machine controller acting over the roller nips (23, 24).

5. The method according to claims 4 wherein the web (11) includes a printing pattern, and the label (31) is applied in exact correspondence with said target zones.

## Patentansprüche

1. Anlage zum Laserritzen und Laminieren, umfassend:
eine Abwickelstation (A), von der aus eine Bahn (11) aus flexiblem Material, wie beispielsweise einer Polymerfolie, mittels Rollen einer Träger- und Führungslinie zugeführt wird;
eine Laserstation (B1), die in einem geführten Durchlauf der oben genannten Materialbahn (11) angeordnet ist, wobei die Laserstation (B1) mindestens eine Lasereinheit (20) umfasst, um durch Anritzen der Bahn (11) mit einer vorgegebenen Kontur in bestimmten Zielbereichen Schwächungslinien zu erzeugen;
eine Etikettierstation (B2);
eine Schneide- und Aufwickelstation (C) zum Aufwickeln und/oder Schneiden der Bahn (11) nach Bearbeitung in der Laserstation (B1) und in der Etikettierstation (B2),
**dadurch gekennzeichnet, dass**
die Etikettierstation (B2) in einem weiteren geführten Durchlauf der oben genannten Materialbahn (11) angeordnet ist und mindestens eine Etikettiereinheit (30) umfasst, die zum Aufbringen eines wiederverschließbaren Etiketts (31) in diesen Zielbereichen mittels Laminierung vorgesehen ist;
die Bahn (11) aus flexiblem Material selektiv so gefördert werden kann, dass sie zuerst durch die Laserstation (B1) und dann durch die Etikettierstation (B2) oder umgekehrt oder aber ausschließlich durch die Laserstation (B1) läuft;
der Durchlauf der Bahn (11) durch die genannte Laserstation (B1) einen Abschnitt durch zwei einstellbare Walzenspalte (23, 24) sowie einen Abschnitt in Kontakt mit einer oberen, auf einer Wägezelle basierenden Wiegevorrichtung (21) und in Kontakt mit einer unteren, auf einer Wägezelle basierenden Wiegevorrichtung (22) umfasst;
sodass durch Einwirkung auf die einstellbaren Walzenspalte (23, 24) eine zweifach gesteuerte Zugspannung auf die Bahn (11) ausgeübt wird, abhängig davon, ob die Bahn (11) zuerst durch die Laserstation (B1) und dann durch die Etikettierstation (B2) läuft oder die Bahn (11) zuerst durch die Etikettierstation (B2) und dann mit Etikett (31) durch die Laserstation (B1) läuft; wobei sich die zweifache Zugspannung aus den unterschiedlichen Werten der auf Wägezellen basierenden Wiegevorrichtungen (21, 22), die an eine auf die Walzenspalte (23, 24) einwirkende Maschinensteuerung übertragen werden, ergibt.

2. Anlage zum Laserritzen und Laminieren nach Anspruch 1, wobei die Bahn (11) ein Druckmuster aufweist und das Etikett (31) in exakter Übereinstimmung mit den genannten Zielbereichen aufgebracht wird.

3. Anlage zum Laserritzen und Laminieren nach Anspruch 1 oder 2, wobei die Bahn in mehrere parallele, jeweils ein Etikett (31) enthaltende Streifen geschnitten wird.

4. Verfahren zum Laserritzen und Laminieren, wobei das Verfahren Folgendes umfasst:
Zuführen einer Bahn (11) aus flexiblem Material, wie beispielsweise einer Polymerfolie, mittels Rollen zu einer Träger- und Führungslinie;
Hindurchführen der zugeführten Bahn (11) durch eine Laserstation (B1) mit mindestens einer Lasereinheit (20), um durch Anritzen der Bahn (11) mit einer vorgegebenen Kontur in bestimmten Zielbereichen Schwächungslinien zu erzeugen;
Hindurchführen der mit Ritzlinien versehenen Bahn (11) durch eine Etikettierstation (B2) mit mindestens einer Etikettiereinheit (30), die zum Aufbringen eines wiederverschließbaren Etiketts (31) in diesen Zielbereichen mittels Laminierung vorgesehen ist; und
Schneiden der mit Etikett (31) versehenen zugeführten Bahn (11) und Aufwickeln;
wobei die Bahn (11) aus flexiblem Material selektiv so gefördert wird, dass sie zuerst durch die Laserstation (B1) und dann durch die Etikettierstation (B2) oder umgekehrt oder aber ausschließlich durch die Laserstation (B1) läuft;
**dadurch gekennzeichnet, dass**
der Durchlauf der Bahn (11) durch die genannte Laserstation (B1) einen Abschnitt durch zwei einstellbare Walzenspalte (23, 24) sowie einen Abschnitt in Kontakt mit einer oberen, auf einer Wägezelle basierenden Wiegevorrichtung (21) und in Kontakt mit einer unteren, auf einer Wägezelle basierenden Wiegevorrichtung (22) umfasst;
sodass durch Einwirkung auf die einstellbaren Walzenspalte (23, 24) eine zweifach gesteuerte Zugspannung auf die Bahn (11) ausgeübt wird, abhängig davon, ob die Bahn (11) zuerst durch die Laserstation (B1) und dann durch die Etikettierstation (B2) läuft oder die Bahn (11) zuerst durch die Etikettierstation (B2) und dann mit Etikett (31) durch die Laserstation (B1) läuft; wobei sich die zweifache Zugspannung aus den unterschiedlichen Werten der auf Wägezellen basierenden Wiegevorrichtungen (21, 22), die an eine auf die Walzenspalte (23, 24) einwirkende Maschinensteuerung übertragen werden, ergibt.

5. Verfahren nach Anspruch 4, wobei die Bahn (11) ein Druckmuster aufweist und das Etikett (31) in exakter Übereinstimmung mit den genannten Zielbereichen aufgebracht wird.

## Revendications

1. Installation de microperforation au laser et de laminage, comprenant :
une station de déroulage (A) à partir de laquelle une bande (11) de matériau flexible, tel qu'un film polymérique, est acheminée vers une ligne de support et de guidage au moyen de rouleaux ;
une station laser (B1) comprise dans un passage guidé de ladite bande (11) de matériau, la station laser (B1) comprenant au moins une unité laser (20) destinée à créer des lignes d'affaiblissement en microperforant la bande (11) selon un certain contour dans des zones cibles ;
une station d'étiquetage (B2) ;
une station de refente-rembobinage (C) destinée à rembobiner et/ou refendre la bande (11) après traitement dans la station laser (B1) et dans la station d'étiquetage (B2),
**caractérisée en ce que**
la station d'étiquetage (B2) est comprise dans un autre passage guidé de ladite bande (11) de matériau, comprenant au moins une unité d'étiquetage (30) prévue pour fixer par laminage une étiquette refermable (31) dans ces zones cibles ;
la bande (11) de matériau flexible peut être entraînée sélectivement de manière à passer d'abord par la station laser (B1) puis par la station d'étiquetage (B2), ou inversement, ou encore à ne passer que par la station laser (B1) ;
le passage de la bande (11) le long de ladite station laser (B1) comprend un trajet à travers deux jeux de rouleaux réglables (23, 24) et un trajet en contact avec une pesée supérieure à cellule de charge (21) et en contact avec une pesée inférieure à cellule de charge (22) ;
de telle sorte qu'une double tension contrôlée est appliquée à la bande (11) en agissant sur les jeux de rouleaux réglables (23, 24) selon que la bande (11) passe d'abord par la station laser (B1) puis par la station d'étiquetage (B2), ou d'abord par la station d'étiquetage (B2) puis la bande (11) et l'étiquette (31) par la station laser (B1), ladite double tension étant obtenue par les différentes valeurs des pesées à cellules de charge (21, 22), lesquelles sont transmises à un contrôleur de machine agissant sur les jeux de rouleaux (23, 24).

2. Installation de microperforation au laser et de laminage selon la revendication 1, dans laquelle la bande (11)
comprend un motif imprimé, et l'étiquette (31) est appliquée en correspondance exacte avec lesdites zones cibles.

3. Installation de microperforation au laser et de laminage selon l'une quelconque des revendications 1 ou 2, dans laquelle la bande est refendue selon plusieurs lignes parallèles, chacune comprenant une étiquette (31).

4. Procédé de microperforation au laser et de laminage, ledit procédé comprenant :
l'alimentation d'une bande (11) de matériau flexible, tel qu'un film polymérique, vers une ligne de support et de guidage au moyen de rouleaux ;
le passage de la bande (11) alimentée à travers une station laser (B1) comprenant au moins une unité laser (20) destinée à créer des lignes d'affaiblissement en microperforant la bande (11) selon un certain contour dans des zones cibles ;
le passage de la bande (11) alimentée et microperforée à travers une station d'étiquetage (B2) comprenant au moins une unité d'étiquetage (30) prévue pour fixer par laminage une étiquette refermable (31) dans ces zones cibles ; et
la refente de la bande (11) alimentée munie de l'étiquette (31) et le rembobinage ;
dans lequel la bande (11) de matériau flexible est entraînée sélectivement de manière à passer d'abord par la station laser (B1) puis par la station d'étiquetage (B2), ou inversement, ou encore à ne passer que par la station laser (B1).
**caractérisée en ce que**
le passage de la bande (11) le long de ladite station laser (B1) comprend un trajet à travers deux jeux de rouleaux réglables (23, 24) et un trajet en contact avec une pesée supérieure à cellule de charge (21) et en contact avec une pesée inférieure à cellule de charge (22) ;
de telle sorte qu'une double tension contrôlée est appliquée à la bande (11) en agissant sur les jeux de rouleaux réglables (23, 24) selon que la bande (11) passe d'abord par la station laser (B1) puis par la station d'étiquetage (B2), ou d'abord par la station d'étiquetage (B2) puis la bande (11) et l'étiquette (31) par la station laser (B1), ladite double tension étant obtenue par les différentes valeurs des pesées à cellules de charge (21, 22), lesquelles sont transmises à un contrôleur de machine agissant sur les jeux de rouleaux (23, 24).

5. Procédé selon la revendication 4, dans lequel la bande (11) comprend un motif imprimé, et l'étiquette (31) est appliquée en correspondance exacte avec lesdites zones cibles.
